# EUROPEAN PATENT APPLICATION

(11) **EP 4 418 015 A1**
(43) Date of publication of application: **21.08.2024**
(21) Application number: 22880903.4
(22) Date of filing: 06.10.2022
(51) Int. Cl.: G01S 17/89, G01S 13/931, G05D 1/02, G06T 7/00, G06T 7/215, G08G 1/16, G16Y 10/40, G16Y 20/20, G16Y 40/10

(54) **IMAGE SENSOR DATA CONTROL SYSTEM**

(30) Priority: 15.10.2021 JP 2021169461
(71) Applicant: Shibaura Institute of Technology, Tokyo 135-8548 (JP)
(72) Inventor: SHINKUMA Ryoichi, Tokyo 135-8548 (JP)
(74) Representative: Viering, Jentschura & Partner mbB Patent- und Rechtsanwälte
(86) International application number: PCT/JP2022/037427
(87) International publication number: WO 2023/063208

(57) **Abstract**

The purpose of the present invention is to provide an image sensor data control system capable of controlling image sensor data composed of point clouds pertaining to static and dynamic objects in real space. A terminal device 1 acquires image sensor data in real space from a sensor unit 111 and transmits the data to a server device 2 by a transmission unit 12. The server device 2 aggregates the image sensor data in the real space transmitted from each terminal device 1 by the aggregation unit 22, and then learns about the motion feature index of the image sensor data composed of point clouds in each spatial region in the real space by the learning unit 23 to determine the spatial region pertaining to a dynamic object or static object in the real space, and stores it in a motion feature index information storage unit 24. The server device 2 preferentially transmits the image sensor data in the spatial region determined to be a dynamic object by the learning unit 23 to the moving object 3, with respect to the image sensor data acquired in real time.

## Description

### Technical Field

The present invention relates to an image sensor data control system that controls image sensor data acquired in a real space.

### Background Art

In recent years, attention has focused on smart cities as urban development that uses ICT (Information and Communication Technology) to solve social issues by improving the quality of life and promoting economic circulation through the creation of new value. This smart city is not just digitalization but can be described as a transformation similar to the innovation from cell phones to smartphones. And as a cyber-physical system that supports a smart city, real machines, such as robots, drones, and autonomous vehicles, utilize virtual information, such as three-dimensional images to perform tasks.

For example, the applicant, Shibaura Institute of Technology, is also promoting the concept of a "Next-Use Type Future City" as a part of its Smart City initiative. In this concept, in the Toyosu area of Tokyo, which is a growing area with diverse stakeholders such as residents, workers, and visitors, it aims to provide service solutions in various fields through the use of advanced technology and urban OS to enhance individual fulfillment and satisfaction, solve city issues, and enable diverse facilities and individuals to coexist and co-prosper.

In realizing such a smart city, autonomous vehicles are already equipped with cameras and millimeter wave radar as a means of acquiring virtual information such as the three-dimensional images described above. For example, cameras can detect most of the information necessary for driving, such as white lines, signs, other vehicles, and the surrounding environment, but it is difficult for them to measure the distance to objects. Furthermore, millimeter wave radar, which emits radio waves in the frequency range of 30 GHz to 300 GHz known as millimeter waves and measures their reflections, can easily detect the relative speed with respect to surrounding vehicles. However, its azimuth resolution is relatively low, making it challenging to detect objects with low radar reflectivity, such as trees.

Therefore, recently, sensors called LiDAR (light detection and ranging), alongside cameras and millimeter wave radar, have been attracting attention. This LiDAR is a type of sensor using laser light, characterized by a higher radiation flux density compared to radio waves. By irradiating short wavelength laser light onto an object while scanning it, this technology enables the accurate detection of not only the distance to the object but also its position and shape. Therefore, when using LiDAR in real spaces containing static objects such as walls and dynamic objects such as automobiles, it becomes possible to acquire the real space's three-dimensional information as image sensor data composed of point clouds generated by laser light. Moreover, in addition to LiDAR mounted on autonomous vehicles, the LiDAR placed in the surrounding environment, such as traffic lights and streetlights on the road side, can be used to inform the autonomous vehicle of the status of blind spots and dangers on the road through the transmission of the image sensor data to the autonomous vehicle (see, for example, Non-Patent Document 1).

### Prior Art Document

### Patent Document

Non-Patent Document 1: Shackleton, J., VanVoorst, B., & Hesch, J. (2010, August). Tracking people with a 360-degree lidar. In 2010 7th IEEE International Conference on Advanced Video and Signal Based Surveillance (pp. 420-426). IEEE.

### SUMMARY OF THE INVENTION

### Problems to be Solved by the Invention

However, acquiring three-dimensional information on real space in real time with LiDAR results in an enormous data volume. Therefore, for effective data management, it is beneficial to reduce image sensor data for static objects, such as walls, ground, and ceilings, which do not undergo temporal changes, and to prioritize image sensor data for dynamic objects, such as automobiles and pedestrians, which change over time, proves beneficial. In particular, by using multiple LiDAR systems, it is possible to improve the quality of three-dimensional information in real space by eliminating blind spots and increasing the point density of the data. However, as the data volume further increases, it becomes increasingly advantageous to reduce the information on static objects. Such problems are not limited to LiDAR, but also occur in other sensors that acquire image sensor data composed of point clouds.

The present invention has been made in view of the technical background described above and aims to provide an image sensor data control system capable of controlling the priority of image sensor data in each spatial region related to static and dynamic objects in real space.

### Means for Solving the Problems

To attain the above-described objects, the present invention relates to an image sensor data control system in which one or more terminal devices and a server device are connected in a communicable manner, and the server device controls the image sensor data acquired by each terminal device.

The terminal includes
a sensor unit configured to acquire image sensor data composed of point clouds in real space, and
a terminal-side transmission unit configured to transmit the image sensor data to the server device, the image sensor data being composed of point clouds in the real space and having been acquired by the sensor unit.

The server device includes
a receiving unit configured to receive the image sensor data that is composed of point clouds in the real space and has been transmitted from each of the terminal devices,
an aggregation unit configured to aggregate the image sensor data, the image sensor data being composed of point clouds in the real space and having been received by the receiving unit,
a learning unit configured to learn a motion feature index of the image sensor data in each spatial region in the real space as indicating a feature related to a movement of a static object or a dynamic object in each spatial region in the real space, based on the image sensor data that has been aggregated by the aggregation unit and is composed of point clouds in the real space,
a motion feature index information storage unit configured to store information on the motion feature index of the image sensor data in each spatial region in the real space, the motion feature index having been learned by the learning unit, and
a control unit configured to set a priority of the image sensor data in each spatial region in the real space, based on the information on the motion feature index of the image sensor data in each spatial region in the real space, the information having been stored in the motion feature index information storage unit.

Further, it may be configured such that a plurality of the terminal devices is provided to acquire the image sensor data composed of point clouds from different directions with respect to the same real space, and the aggregation unit aggregates the image sensor data by synthesizing the image sensor data in chronological order, the image sensor data having been acquired by each terminal device and being composed of point clouds.

Further, it may be configured such that the learning unit utilizes the number of point clouds of the image sensor data in each spatial region in the real space as the motion feature index.

Further, it may be configured such that the learning unit determines whether the spatial region relates to a static object or a dynamic object by learning temporal changes in the motion feature index of the image sensor data in each spatial region in the real space.

Further, it may be configured such that the learning unit determines that the spatial region relates to the static object when a deviation of the motion feature index of the image sensor data in a predetermined spatial region in the real space is within a predetermined range, while the learning unit determines that the spatial region relates to the dynamic object when the deviation of the motion feature index of the image sensor data in the predetermined spatial region is outside the predetermined range.

Further, it may be configured such that the learning unit determines that there are many dynamic objects moving in the spatial region when an average of the motion feature indexes of the image sensor data in the predetermined spatial region in the real space exceeds a predetermined threshold, while the learning unit determines that there are fewer dynamic objects moving in the spatial region when the average of the motion feature indexes of the image sensor data in the predetermined spatial region in the real space is below or equal to the predetermined threshold.

Further, it may be configured such that the control unit sets a higher priority for the image sensor data in the spatial region determined to be a dynamic object by the learning unit, while the control unit sets a lower priority for the image sensor data in the spatial region determined to be a static object by the learning unit.

Further, it may be configured such that the control unit sets a higher priority for the image sensor data in the spatial region determined by the learning unit to have a larger number of moving dynamic objects, while the control unit sets a lower priority for the image sensor data in the spatial region determined by the learning unit to have a smaller number of moving dynamic objects.

Further, it may be configured such that, with respect to the image sensor data acquired in real time by the terminal device, the control unit determines that a moving speed of a dynamic object in a predetermined spatial region is high and sets a higher priority to the image sensor data in the spatial region when a rate of change of the motion feature index of the image sensor data in the spatial region in the real space in a predetermined period of time exceeds a predetermined threshold, while the control unit determines that a moving speed of the dynamic object in the spatial region is low and sets a lower priority to the image sensor data in the spatial region when the rate of change of the motion feature index of the image sensor data in the specified spatial region in the real space in the predetermined time period of time is less than or equal to the predetermined threshold.

Further, it may be configured such that a server-side transmission unit is provided on an output side of the aggregation unit, and the control unit controls the server-side transmission unit to preferentially transmit image sensor data in a spatial region that is set to a higher priority, to a predetermined moving object, with respect to the image sensor data acquired in real time by the terminal device.

Further, it may be configured such that the control unit controls the terminal-side transmission unit to preferentially transmit the image sensor data in a spatial region that is set to a higher priority, to the server device, with respect to the image sensor data acquired in real time by the terminal device.

Further, it may be configured such that the terminal-side transmission unit receives the priority of the image sensor data in each spatial region from the server device in advance, and preferentially transmits the image sensor data in the spatial region assigned a higher priority to the server device.

It may be configured such that the real space is composed of a plurality of cells arranged in a grid as spatial regions, and the control unit sets a priority of the image sensor data for each cell.

### Effects of the Invention

According to the present invention, by learning the motion feature index of image sensor data composed of point clouds acquired in real space, the priority of image sensor data in each spatial region related to static or dynamic objects in the real space can be set. Therefore, for the spatial regions (mainly spatial regions related to dynamic objects) with a higher priority set for image sensor data, real-time image sensor data can be transmitted to moving objects, etc., with priority. On the other hand, for the spatial regions (mainly spatial regions related to static objects) for which the priority of image sensor data is set to low, real-time image sensor data can either not be transmitted to moving objects, or be transmitted with a delay. Therefore, it is possible to transmit image sensor data acquired in real-time at the terminal device to moving objects, etc., for each spatial region based on the priority of the image sensor data in each spatial region in real space, which makes it possible to quickly inform moving objects about the conditions of road blind spots and potential dangers.

### BRIEF DESCRIPTION OF THE DRAWINGS

FIG. 1 is a block diagram showing a configuration of an image sensor data control system according to an embodiment of this system.
FIG. 2 is a block diagram showing a configuration of a server according to one embodiment.
FIG. 3 is a diagram showing a virtual three-dimensional real space.
FIG. 4 is a diagram showing one example of image sensor data obtained from LiDAR(a).
FIG. 5 is a diagram showing one example of image sensor data obtained from LiDAR(b).
FIG. 6 is a diagram showing one example of composite image sensor data obtained by synthesizing image sensor data from LiDAR(a) and LiDAR(b).
FIG. 7 is a graph showing the temporal changes in the number of point clouds within the image sensor data from LiDAR(a).
FIG. 8 is a graph showing temporal changes in the number of point clouds obtained by synthesizing image sensor data from LiDAR(a) and LiDAR(b).
FIG. 9 is a flowchart showing the flow of processing the image sensor data during the learning phase in this system.
FIG. 10 is a flowchart showing the flow of setting the priority for image sensor data in this system.
FIG. 11 is a diagram showing a virtual real space according to Example 1 of the present invention.
FIG. 12 is a diagram showing a virtual real space according to Example 2 of the present invention.
FIG. 13 is a diagram showing a virtual real space according to Example 3 of the present invention.
FIG. 14 is a table showing the trends of motion feature indices for image sensor data across each spatial region within a virtual real space according to Example 3 of the present invention.

### EMBODIMENTS FOR CARRYING OUT THE INVENTION

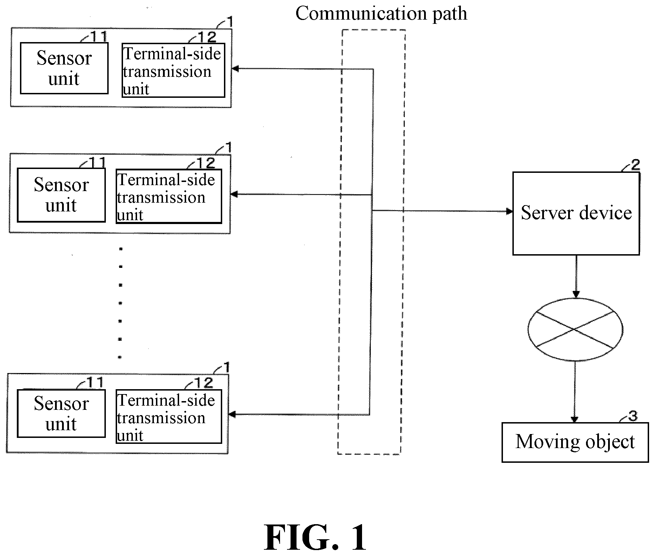

Next, an image sensor data control system (hereinafter referred to as "the system") will be described with reference to FIG. 1 to FIG. 10.

### [Overall Structure]

As shown in FIG. 1, this system has a plurality of terminal devices 1 and a server device 2 connected to each terminal device 1 via a predetermined communication path. Image sensor data in real space acquired by each terminal device 1 is managed by the server device 2, and real-time image sensor data in each spatial region in real space is transmitted to a moving object 3 (e.g., an autonomous vehicle) via a network or other means.

Note that a "real space" refers to primarily three-dimensional spaces that actually exist and are associated with social life or the environment, including roads, streets, buildings, indoor spaces, rivers, and mountains. Further, a "spatial region" in real space denotes a region obtained by dividing the real space into multiple sections using an arbitrary shape, such as a cube.

### [Configuration of Terminal Device 1]

The terminal device 1 is installed in traffic lights, street lights, security camera devices, and traffic camera devices, etc. The terminal device 1 is equipped with a sensor unit 11 that acquires image sensor data composed of point clouds in real space, as well as a terminal-side transmission unit 12 that transmits the image sensor data composed of point clouds in real space acquired by the sensor unit 11 to the server device 2, as shown in FIG. 1.

The sensor unit 11 is a so-called LiDAR (light detection and ranging) sensor. This LiDAR, a type of sensor that uses laser light, has a higher radiation flux density compared to radio waves. By irradiating and scanning an object with short wavelength laser light, the LiDAR acquires image sensor data composed of point clouds in real space, thereby accurately detecting not only the distance to the object but also its position and shape.

This LiDAR includes a method of acquiring image sensor data in all 360-degree directions by rotating a light emitter that emits multiple laser light, and a method of acquiring image sensor data by irradiating laser light as it is within a predetermined light irradiation angle. Further, while the greater the number of light emitters emitting laser light results in more accurate image sensor data, it also makes the system more expensive. Therefore, using an inexpensive LiDAR with a fewer number of light emitters may be acceptable.

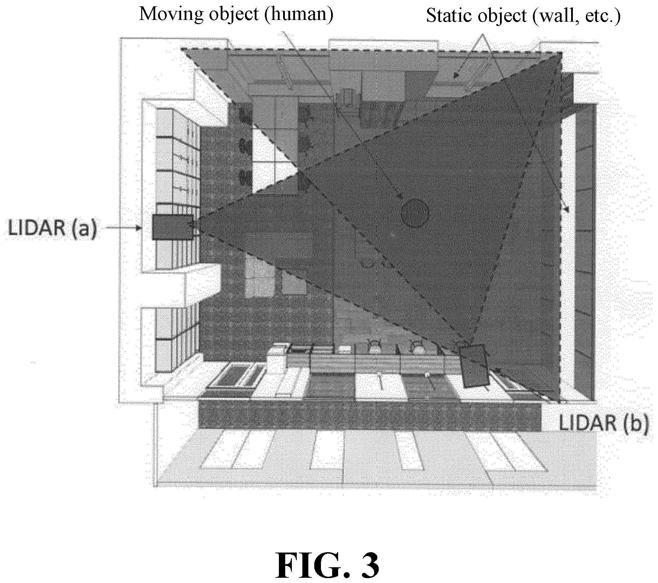

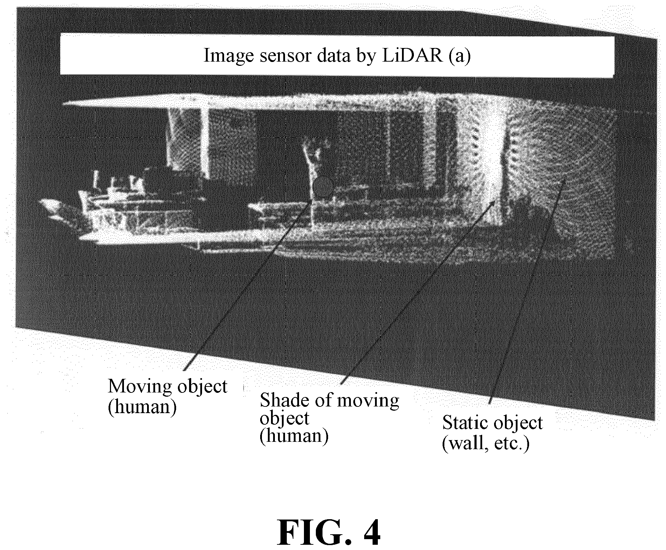

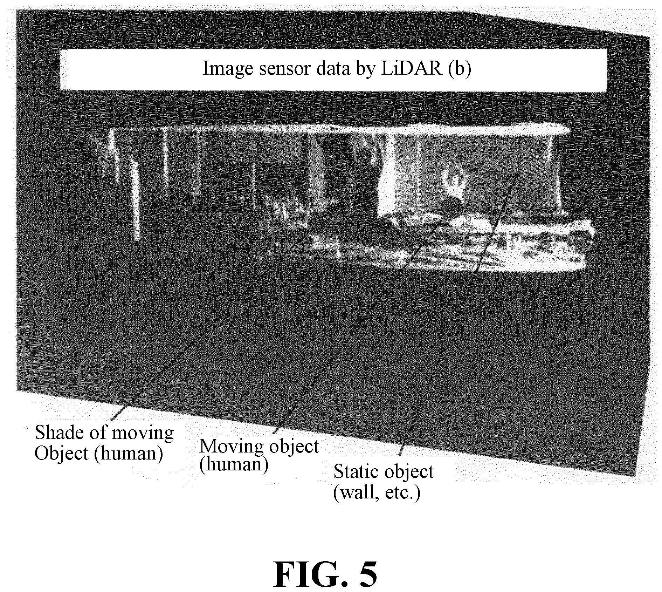

Hereinafter, an example of acquiring image sensor data composed of point clouds in real space by LiDAR will be described. As shown in FIG. 3, let the interior of a certain room, surrounded by walls on all four sides, with desks, chairs, and bookshelves at various locations and a waving person in the center, be a three-dimensional real space, and install LiDAR(a) on the left center wall and LiDAR(b) on the right bottom wall of FIG. 3. Then, when the laser light is irradiated by the LiDAR(a) while scanning the room interior at a predetermined irradiation angle, the LiDAR(a) acquires image sensor data composed of point clouds as shown in FIG. 4, and recognizes a person in the center, as well as the surrounding walls, desks, chairs, and bookshelves, and also can recognize the shadow of the person on the right. On the other hand, when the laser light is irradiated by the LiDAR(b) while scanning the room interior at a predetermined irradiation angle, the LiDAR(b) acquires image sensor data composed of point clouds as shown in FIG. 5, and recognizes a person at the center of the right side, as well as the surrounding walls, desks, chairs, and bookshelves, and can also recognize the shadow of the person in the center. The reason for this shadow of the person is that the laser light irradiated onto the person does not reach the wall behind the person due to the high directivity of the laser light being irradiated.

In such a three-dimensional real space, the spatial region containing objects that do not move or hardly move, such as walls, desks, chairs, and bookshelves, becomes a spatial region related to static objects. On the other hand, a spatial region containing moving objects, such as a waving person, becomes a spatial region related to dynamic objects. In the image sensor data in the real space, as will be described later, the image sensor data in the spatial region related to static objects has a lower priority, while the image sensor data in the spatial region related to dynamic objects has a higher priority. Therefore, it is important to distinguish between the spatial regions related to static objects and the spatial regions related to dynamic objects in the real space.

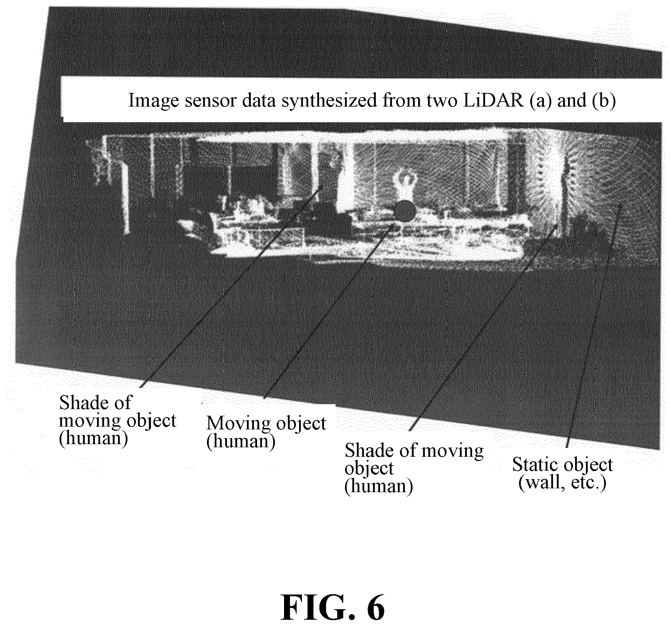

When image sensor data is acquired by a single LiDAR, shadows of dynamic objects are generated as described above, and the spatial regions where these shadows occur may appear as blanks. This makes it difficult to distinguish and determine the spatial region related to a static object from that related to a dynamic object. Therefore, for example, by synthesizing the image sensor data composed of the point clouds shown in FIG. 4 by the LiDAR(a) and the image sensor data composed of the point clouds shown in FIG. 5 by the LiDAR(b), image sensor data composed of the point clouds shown in FIG. 6 can be obtained to reduce the shadow effect of a dynamic object. For this reason, a plurality of the terminal devices 1 is preferably provided so that image sensor data composed of point clouds is acquired from different directions in relation to the same real space.

Note that in this embodiment, although LiDAR is used as the sensor unit 11, other sensors may be used as long as they are capable of acquiring image sensor data composed of point clouds.

### [Configuration of Server Device 2]

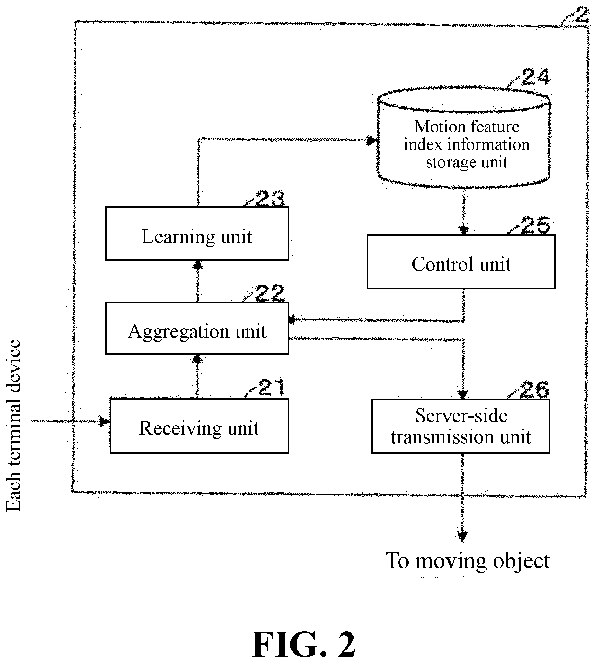

The server device 2 is located near the terminal device 1 and, as shown in FIG. 2, is provided with a receiving unit 21 for receiving image sensor data composed of point clouds in real space transmitted from each terminal device 1, an aggregation unit 22 for aggregating image sensor data composed of point clouds in real space, a learning unit 23 for learning a movement characteristic index of image sensor data in each spatial region in real space, and a motion feature index information storage unit 24 for storing information on a movement characteristic index of image sensor data in each spatial region in real space, a control unit 25 for controlling the priority of image sensor data in each spatial region in real space, and a server-side transmission unit 26 for transmitting image sensor data of a spatial region with a higher priority in real space to the moving object 3. Note that in this embodiment, the number of point clouds in image sensor data in each spatial region in real space is described as the motion feature index.

The aggregation unit 22 is responsible for aggregating the image sensor data composed of point clouds in real space received by the receiving unit 21. In this embodiment, it aggregates image sensor data composed of point clouds in real space transmitted from each terminal device 1 by synthesizing them chronologically.

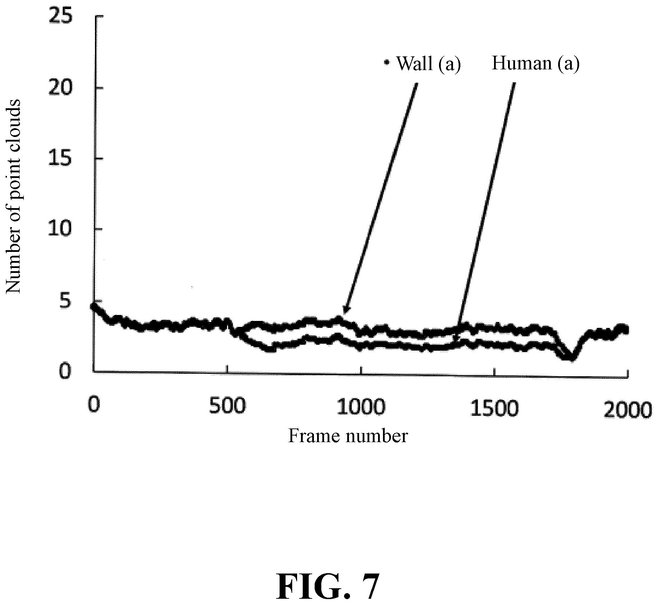

Specifically, FIG. 7 is a graph showing the temporal variation of the number of points (motion feature index) of the image sensor data acquired by LiDAR(a) for two spatial regions (wall/person) in the three-dimensional real space shown in FIG. 3, with the vertical axis representing the number of point clouds (motion feature index) of the image sensor data and the horizontal axis representing time (number of captured frames). The upper graph of these graphs shows little temporal change in the number of image sensor data, and therefore, it can be determined that this is a spatial region related to a static object. On the other hand, the lower graph shows some temporal changes in the number of points in the image sensor data. Therefore, it can be determined that this is a spatial region related to a dynamic object.

Note that when comparing the temporal change between the number of point clouds in the image sensor data in the spatial region related to a static object and the number of point clouds in the image sensor data in the spatial region related to a dynamic object, the difference in the number of point clouds occurs within the range of frame numbers from 500 to 1800. However, because the difference in the number of point clouds is relatively small, it may be difficult to distinguish between spatial regions related to static and dynamic objects.

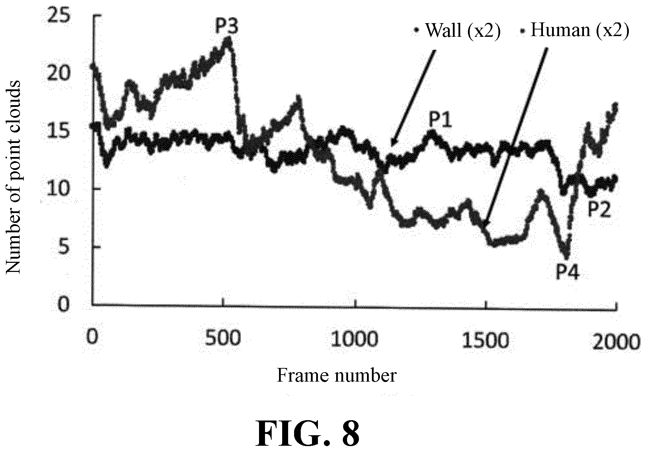

In contrast, in the case of chronologically combining the number of point clouds in image sensor data acquired by the two LiDARs (a) and (b), as shown in FIG. 8. The number of point clouds in the image sensor data in the spatial region associated with static objects, such as walls (×2), shows little temporal variation. In contrast, the number of point clouds in the image sensor data for the spatial domain associated with a dynamic object (Human (×2)) undergoes significant temporal changes. Therefore, the number of point clouds in the spatial region related to a static object and that related to a dynamic object show significant temporal differences, which makes it easier to clearly distinguish the spatial region related to a static object from the spatial region related to a dynamic object. For this reason, it is preferable for the aggregation unit 22 to aggregate the image sensor data, which is composed of point clouds in real space acquired at each terminal device 1, by synthesizing it chronologically.

Note that when aggregating image sensor data composed of point clouds in real space received by the receiving unit 21, the aggregation unit 22 may perform smoothing processing on the point clouds within the image sensor data.

Based on the image sensor data of point clouds in real space aggregated by the aggregation unit 22, the learning unit 23 learns the temporal changes in the number (motion feature index) of point clouds in the image sensor data in each spatial region in real space. These changes are indicative of features associated with the movement of either a static object or a dynamic object in each spatial region in real space.

Specifically, as described above, the number of point clouds in image sensor data in a spatial region related to a dynamic object significantly changes over time, while the number of point clouds in image sensor data in a spatial region related to a static object does not change so much over time. Therefore, the learning unit 23 learns a large amount of the temporal changes in the number of point clouds in image sensor data for each spatial region in real space using machine learning (e.g., Random Forest, XGBoost), in order to determine whether each spatial region is related to a spatial region for a static object or a spatial region for a dynamic object.

In this case, when the deviation (e.g., the difference between the highest value P1 and the lowest value P2 in the image sensor data in the spatial region of the static object (wall) in FIG. 8) of the number of point clouds in the image sensor data in a given spatial region in real space is within a predetermined range, the learning unit 23 may determine that a spatial region is related to a static object. On the other hand, when the deviation (e.g., the difference between the highest value P3 and the lowest value P4 in the image sensor data in the spatial region of a dynamic object (person) in FIG. 8) of the motion feature index of the image sensor data in the given spatial region is outside the predetermined range, the learning unit 23 may determine that the spatial region is related to a dynamic object.

Further, the learning unit 23 calculates the temporal average of the number of point clouds in the image sensor data in a predetermined spatial region in real space. When this temporal average exceeds a predetermined threshold, it may determine that the spatial region contains a high number of dynamic objects in motion. On the other hand, when the temporal average of the number of point clouds in the image sensor data is below or equal to the predetermined threshold, it may be determined that the spatial region contains fewer dynamic objects in motion.

Further, the learning unit 23 may determine the spatial region related to a static object or a dynamic object by combining the deviation and the average of the motion feature indexes of the image sensor data in each spatial region in real space.

The motion feature index information storage unit 24 stores information about the number (motion feature index) of point clouds in the image sensor data in each spatial region in real space that has been learned by the learning unit 23. The information on the number (motion feature index) of point clouds in the image sensor data in each spatial region includes, in addition to the number of point clouds in the image sensor data itself, information on the determination of spatial regions related to dynamic or static objects as described above, information on the number of dynamic objects moving in the spatial region, among other things.

The control unit 25 sets the priority of the image sensor data in each spatial region in real space based on the information about the number (motion feature index) of point clouds in the image sensor data in each spatial region in real space that has been stored in the motion feature index information storage unit 24.

Specifically, the control unit 25 sets a lower priority for the image sensor data in the spatial regions determined by the learning unit 23 to be spatial regions related to static objects due to small temporal changes in the number of point clouds in the image sensor data. On the other hand, the control unit 25 sets a higher priority for the image sensor data in the spatial regions determined by the learning unit 23 to be spatial regions related to dynamic objects due to large temporal changes in the number of point clouds in the image sensor data.

Further, the control unit 25 may also set a higher priority for the image sensor data in spatial regions that are learned by the learning unit 23 to be related to dynamic objects and where there is a higher occurrence of moving dynamic objects. On the other hand, the control unit 25 may set a slightly lower priority for the image sensor data in the spatial regions learned to have fewer moving dynamic objects.

Further, when determining that the rate of change in the number of point clouds in the image sensor data in the predetermined spatial region in real space (in particular, the spatial region related to a dynamic object) within the predetermined time exceeds a predetermined threshold with respect to image sensor data acquired in real time at the terminal device 1, the control unit 25 may set a higher priority for the image sensor data in the spatial region. On the other hand, when the rate of change in the number of point clouds in the image sensor data within a predetermined time is less than or equal to a predetermined threshold, the control unit 25 may lower the priority of the image sensor data in the spatial region by determining that the moving speed of the dynamic object in the spatial region is slow.

Thus, when the aggregation unit 22 aggregates the image sensor data within a predetermined time period in real time, the control unit 25 controls the server-side transmission unit 26 to preferentially transmit the real-time image sensor data to the moving object 3 for the spatial regions (mainly the spatial regions related to dynamic objects) set to have a higher priority of image sensor data. On the other hand, for spatial regions (mainly spatial regions related to static objects) for which image sensor data priority is set low, the server-side transmission unit 26 is controlled so that real-time image sensor data is not transmitted to the moving object 3, or is transmitted with a delay. By setting the priority of the image sensor data in each spatial region in real space as described above, real-time image sensor data in spatial regions (especially spatial regions related to dynamic objects) with a higher priority can be transmitted to the moving object 3 with priority.

### [Flow of Image Sensor Data Learning by This System]

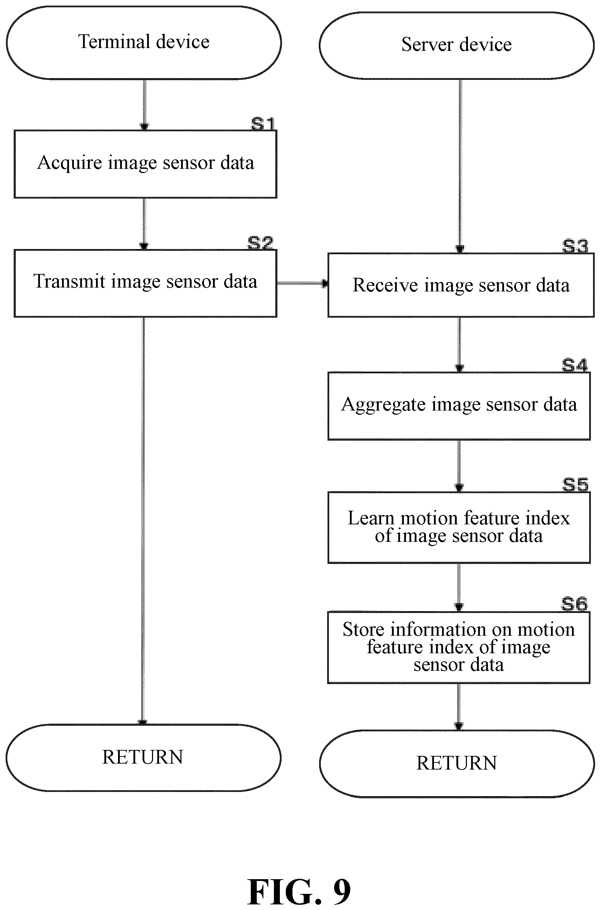

First, the flow of learning with respect to motion feature indexes of image sensor data in each spatial region in real space by this system will be described with reference to FIG. 9. In the following description, "step" will be abbreviated as "S."

First, in each terminal device 1, the sensor unit 11 acquires image sensor data composed of point clouds in real space by scanning and irradiating laser light against the real space (S 1).

Then, the terminal-side transmission unit 12 transmits the image sensor data composed of point clouds in real space acquired by the sensor unit 11 to the server device 2 (S2).

Next, in the server device 2, the receiving unit 21 receives the image sensor data composed of point clouds in real space transmitted from each terminal device 1 (S3).

Then, the aggregation unit 22 aggregates the image sensor data composed of point clouds in real space received by the receiving unit 21 (S4). In this embodiment, image sensor data composed of point clouds in real space transmitted from each terminal device 1 is aggregated through chronological synthesis.

Then, the learning unit 23 learns temporal changes in the number (motion feature index) of point clouds in image sensor data in multiple spatial regions related to a static object or a dynamic object in real space based on the image sensor data of point clouds in real space aggregated by the aggregation unit 22 (S5).

Then, the motion feature index information storage unit 24 stores information about the number (motion feature index) of point clouds in image sensor data in each spatial region in real space that has been learned by the learning unit 23 (S6).

Therefore, by repeating the processing S1 to S6 in this system, a large number of temporal changes in the number (motion feature index) of point clouds in image sensor data in each spatial region in real space can be learned, and thus information on the number (motion feature index) of point clouds in image sensor data in each spatial region in real space can be stored in the motion feature index information storage unit 24.

### [Flow of Image Sensor Data at The Time of Transmission by This System]

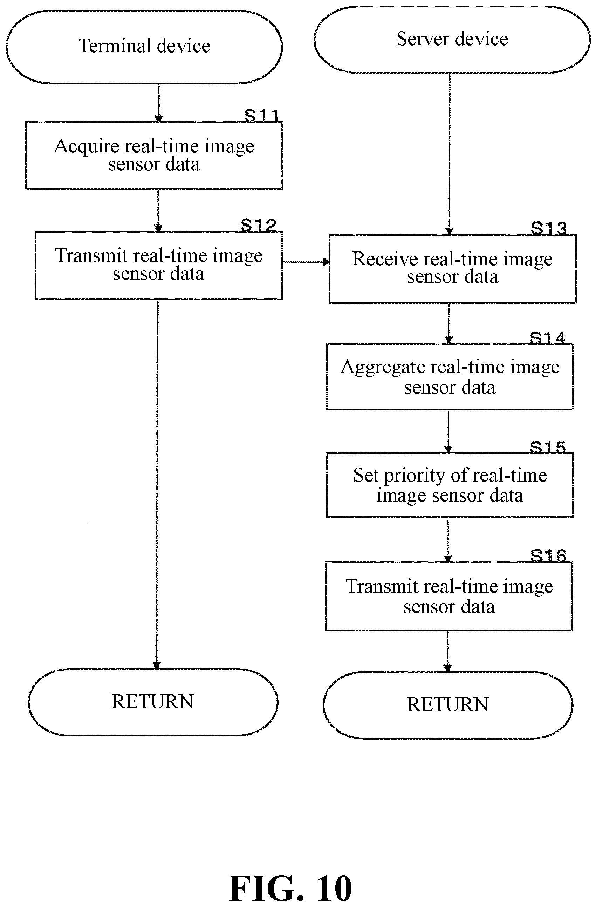

Next, the flow of transmitting image sensor data in each spatial region in real space from this system to a given moving object will be described with reference to FIG. 10.

First, in each terminal device 1, the sensor unit 11 acquires image sensor data composed of point clouds in real space by scanning and irradiating laser light against the real space (S11).

Then, the terminal-side transmission unit 12 transmits the image sensor data composed of point clouds in real space acquired by the sensor unit 11 to the server device 2 (S12).

Next, in the server device 2, the receiving unit 21 receives the image sensor data composed of point clouds in real space transmitted from each terminal device 1 (S 13).

Then, the aggregation unit 22 aggregates the image sensor data composed of point clouds in real space received by the receiving unit 21 (S14).

The control unit 25 sets the priority of the image sensor data in each spatial region in real space based on the information about the number (motion feature index) of point clouds in image sensor data in each spatial region in real space that has been stored in the motion feature index information storage unit 24 (S15). Note that the control unit may set the priority of image sensor data for each spatial region in real space in advance, during the learning process or similar times described above.

Then, for the spatial regions (mainly spatial regions related to dynamic objects) for which a higher priority of image sensor data is set, the control unit 25 controls the server-side transmission unit 26 so that real-time image sensor data is preferentially transmitted to the moving object 3. On the other hand, for the spatial regions for which a lower priority is set for image sensor data (mainly spatial regions related to static objects), the server-side transmission unit 26 is controlled so that real-time image sensor data is not transmitted to the moving object 3, or is transmitted with a delay (S16).

Thus, it becomes possible to transmit the image sensor data acquired in real time by the terminal device 1 to the moving objects 3, etc., for each spatial region according to the priority of the image sensor data in each spatial region of real space, and to quickly inform the moving objects 3, etc., of the situation in and danger of blind spots on the road.

Note that in this embodiment, the number of point clouds was used as a motion feature index for image sensor data in spatial regions in real space, but other indices related to point clouds, such as density and distribution of point clouds, may also be used.

Then, for the spatial regions (mainly spatial regions related to dynamic objects) for which a higher priority of image sensor data is set, the control unit 25 controls the server-side transmission unit 26 so that real-time image sensor data is preferentially transmitted to the moving object 3. On the other hand, for the spatial regions for which a lower priority is set for image sensor data (mainly spatial regions related to static objects), the server-side transmission unit 26 is controlled so that real-time image sensor data is not transmitted to the moving object 3, or is transmitted with a delay. For example, the control unit 25 may control the terminal-side transmission unit 12 of the terminal device 1 to transmit real time image sensor data to the server device 2 for spatial regions (primarily spatial regions related to dynamic objects) for which a higher priority of image sensor data is set. On the other hand, for spatial regions (primarily spatial regions related to static objects) for which a lower priority of image sensor data is set, the control unit 25 may control the terminal-side transmission unit 12 to either not transmit the real-time image sensor data to the server device 2 or to transmit it with a delay.

Further, the terminal-side transmission unit 12 receives in advance the priorities of image sensor data in each spatial region from the server device 2. For spatial regions (primarily those related to dynamic objects) for which a higher priority is set for image sensor data, the terminal-side transmission unit 12 may transmit the image sensor data to the server device 2. On the other hand, for spatial regions (primarily those related to static objects) for which a lower priority is set for image sensor data, the terminal-side transmission unit 12 may not transmit the image sensor to the server device 2, or may transmit the image sensor with a delay.

Although the terminal device 1 integrates the sensor unit 11 and the terminal-side transmission unit 12 into a single unit, they may be configured separately.

### EXAMPLES

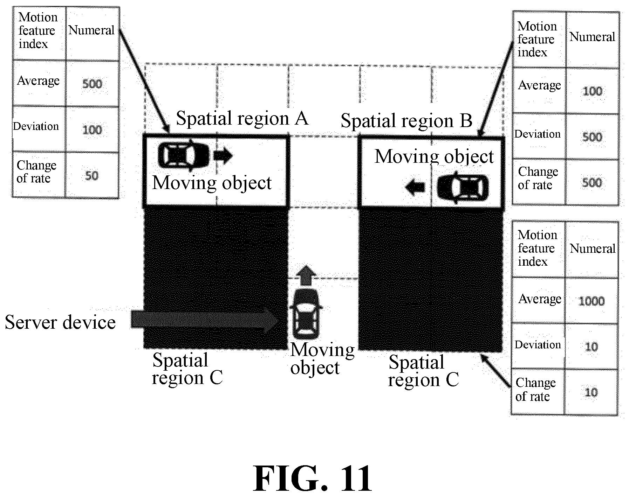

Hereinafter, Examples 1 to 3 of the present invention will be described in detail with reference to FIG. 11 to FIG. 13.

For each of Examples 1 to 3, the terminal device 1 is installed at multiple predetermined locations in a virtual real space to acquire image sensor data composed of point clouds in the same virtual real space from multiple directions.

In addition, after aggregating the image sensor data composed of point clouds from the entire virtual real space transmitted from each terminal device 1, the server device 2 learns the temporal changes in the number (motion feature indices) of point clouds for each spatial region (in this embodiment, multiple cells arranged in a grid in two dimensions), stores this information in a database, and sets the priority of image sensor data in each spatial region in real space based on the number (motion feature indices) of point clouds. Although this embodiment will be described with a two-dimensional cell, it may be a three-dimensional cell, etc.

### <Example 1>

In Example 1, the case in which the system avoids an accident at an encounter of moving objects 3 (autonomous vehicles) will be described.

As shown in FIG. 11, in a virtual real space composed of four vertical cells and five horizontal cells, the two cells surrounded by a thick frame on the left are a spatial region A, which relates to a dynamic object in which the moving object 3 is traveling toward the right side, the two cells surrounded by a thick frame on the right are a spatial region B, which relates to a dynamic object in which the moving object 3 is traveling toward the left side, and the four colored cells on the lower left and lower right each are a spatial region C, which relates to static objects such as walls. A case is assumed in which real-time image sensor data in a virtual real space is transmitted to a moving object 3 traveling between the spatial regions C. The average number (motion feature index) of point clouds in image sensor data in each spatial region A, B, and C, as well as their rate of change, are as indicated in the respective tables in FIG. 11.

In this virtual real space, as shown in FIG. 11, the deviation "10" of the number (motion feature index) of point clouds in the image sensor data in the spatial region C is small, so the server device 2 determines that the spatial region C is a spatial region related to static objects. Further, since the deviations "100" and "500" in the number (motion feature index) of point clouds in the image sensor data in the spatial regions A and B are high, the server device 2 determines that the spatial regions A and B are spatial regions related to dynamic objects. Therefore, the server device 2 assigns a higher priority to the image sensor data from the spatial regions A and B, which are associated with dynamic objects, while assigning a lower priority to the image sensor data from the spatial region C, associated with static objects. This enables it to prioritize the transmission of real-time image sensor data from the higher priority spatial regions A and B to the moving object 3.

Further, by comparing the temporal average of the number (motion feature index) of point clouds in image sensor data in the spatial regions A and B, which are determined to be spatial regions related to dynamic objects, the temporal average of the number of point clouds in image sensor data in the spatial region A is larger than that for the spatial region B (A: 500 > B: 100), it is determined that the spatial region A has a greater traffic volume of moving objects 3 than the spatial region B. Therefore, under normal conditions, the server device 2 assigns a particularly higher priority to the image sensor data from the spatial region A, among the spatial regions A and B related to dynamic objects. This enables it to prioritize the transmission of real-time image sensor data from the spatial region A, which is set with a particularly higher priority, to the moving object 3.

Further, when comparing the rate of change in the number of point clouds (motion feature index) in the real-time image sensor data in the spatial region A and the spatial region B, which are determined to be spatial regions related to dynamic objects, it is observed that the rate of changes in the number of point clouds in the image sensor data is greater in the spatial region B than in the spatial region A (B: 500 > A: 50). Therefore, it can be determined that the moving speed of the currently moving object 3 in the spatial region B is faster than in the spatial region A. Therefore, in emergency situations, the server device 2 can assign a particularly higher priority to the image sensor data from the spatial region B among the spatial regions A and B related to dynamic objects, and can transmit real-time image sensor data in the spatial region B, for which the priority is set particularly high, to the moving object 3 on a priority basis.

Then, by transmitting the real-time image sensor data in the spatial regions A and B, which are set primarily with a higher priority according to the priority of the image sensor data for each spatial region in real space acquired by the terminal device 1, to the moving object 3 with priority, it is possible to avoid collisions between the moving object 3 traveling between the spatial region C and the moving object 3 traveling in the spatial regions A and B when they encounter each other.

### <Example 2>

In Example 2, the system is described as preventing a collision between a moving object 3 (an autonomous senior car) and a parked motorcycle.

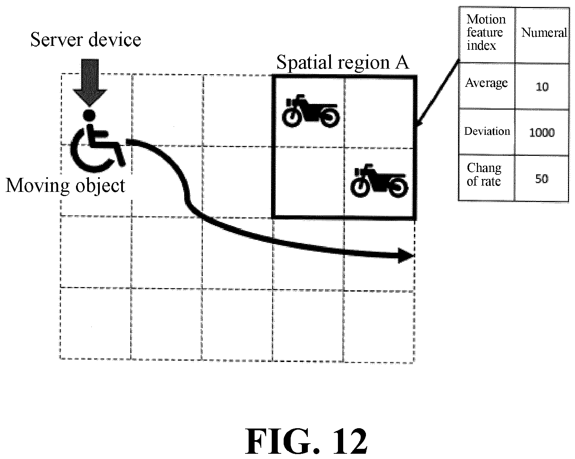

As shown in FIG. 12, in a virtual real space composed of four vertical cells and five horizontal cells, the four cells surrounded by the bold frame in the upper right corner are assumed to be a spatial region A pertaining to a dynamic object in which motorcycles are parked, and real-time image sensor data in a virtual real space is transmitted to a moving object 3 that is moving in the virtual real space.

In this example, as shown in FIG. 12, since the temporal average "10" of the number (motion feature index) of point clouds of the image sensor data in the spatial region A is small, the server device 2 determines that the spatial region A is usually a spatial region related to a static object and not a parking lot. However, since the deviation "1000" of the number (motion feature index) of point clouds in the image sensor data in the spatial region A is large, it is determined that the spatial region A is a parking lot where moving objects 3 (motorcycles) are parked at a low frequency. Therefore, by assigning a higher priority to the image sensor data in the spatial region A, the server device 2 can prioritize transmitting real-time image sensor data from this spatial region to the moving object 3. This approach enables the prevention of potential collisions between the moving object 3 and the parked motorcycle.

### <Example 3>

In Example 3, the case in which the system allows a moving object 3 (a mobile robot that cleans and patrols the facility) to move while avoiding people and obstacles will be described.

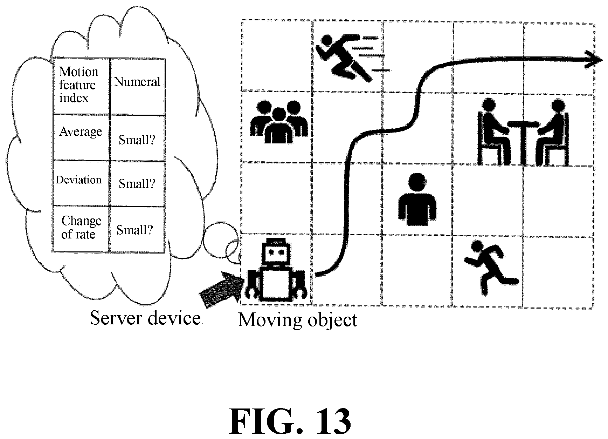

As illustrated in FIG. 13, in a virtual real space composed of four vertical and five horizontal cells, there are spatial regions (cells) existing people and obstacles. This scenario contemplates transmitting real time image sensor data within this virtual real space to the moving object 3, as it navigates through.

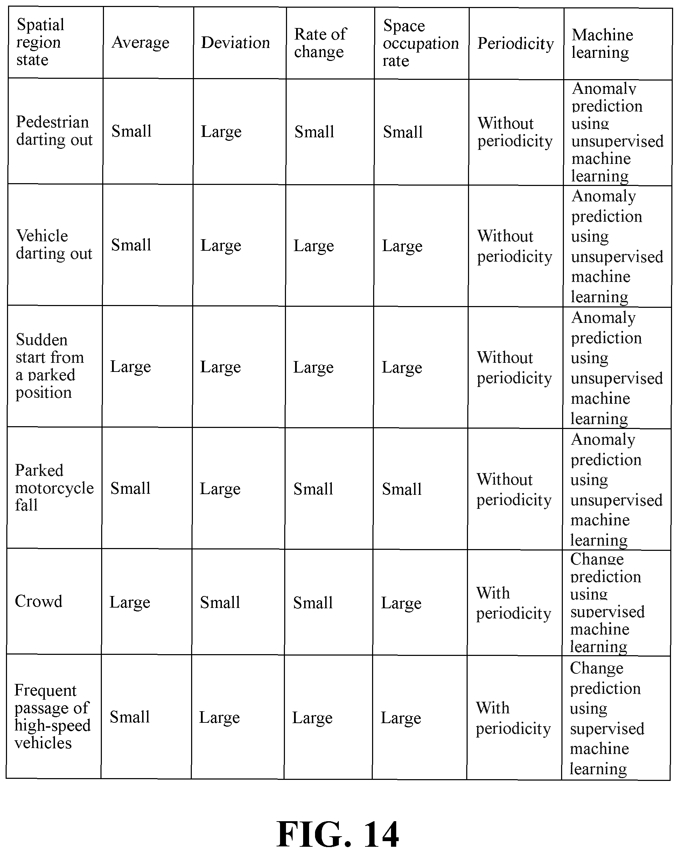

For example, as illustrated in FIG. 14, in spatial regions where pedestrians suddenly appear, cars emerge, parked vehicles abruptly start, parked motorcycles topple over, areas are heavily crowded, and high-speed vehicles frequently pass, the trends of the average, deviation, and rate of change of the number (motion feature index) of point clouds in the image sensor data in each spatial region are shown. Based on these trends in the number (motion feature index) of point clouds of the image sensor data, the server device 2 sets the priority for the image sensor data. Consequently, the server device 2 can prioritize the transmission of real-time image sensor data from spatial regions with a higher priority to the moving object 3 (robot), based on the priority assigned to the image sensor data in each spatial region. This enables the moving object 3 (robot) to perform cleaning and patrolling tasks while navigating around people and obstacles.

Note that, as shown in FIG. 14, when the server device 2 learns the motion features of image sensor data in a spatial region, it may consider factors such as the extent of space occupancy and whether there is any periodicity in the motion feature index of the image sensor data in that spatial region. Additionally, when the server device 2 learns the motion features of image sensor data in a spatial region, it could employ unsupervised machine learning for anomaly prediction or alternatively, utilize supervised machine learning for the same purpose.

Although some embodiments of the present invention have been described above with reference to the drawings, the present invention is not limited to those in the illustrated embodiments. Various modifications and alterations can be made to the illustrated embodiments within the scope or equivalency of the present invention.

### Description of Reference Symbols

- 1:: Terminal Device

- 11:: Sensor unit
- 12:: Terminal-side transmission unit

- 2:: Server Device

- 21:: Receiving unit
- 22:: Aggregation unit
- 23:: Learning unit
- 24:: Motion feature index information storage unit
- 25:: Control unit
- 26:: Server-side transmission unit

- 3:: Moving object

## Claims

1. An image sensor data control system comprising:
one or more terminal devices; and
a server device,
wherein the one or more terminal devices and the server device are connected in a communicable manner,
wherein the server device controls image sensor data acquired by each of the terminal devices,
wherein the terminal device includes
a sensor unit configured to acquire the image sensor data composed of point clouds in real space, and
a terminal-side transmission unit configured to transmit the image sensor data to the server device, the image sensor data being composed of point clouds in the real space and having been acquired by the sensor unit, and
wherein the server device includes
a receiving unit configured to receive the image sensor data that is composed of point clouds in the real space and has been transmitted from each of the terminal devices,
an aggregation unit configured to aggregate the image sensor data, the image sensor data being composed of point clouds in the real space and having been received by the receiving unit,
a learning unit configured to learn a motion feature index of the image sensor data in each spatial region in the real space as indicating a feature related to a movement of a static object or a dynamic object in each spatial region in the real space, based on the image sensor data that has been aggregated by the aggregation unit and is composed of point clouds in the real space,
a motion feature index information storage unit configured to store information on the motion feature index of the image sensor data in each spatial region in the real space, the motion feature index having been learned by the learning unit, and
a control unit configured to set a priority of the image sensor data in each spatial region in the real space, based on the information on the motion feature index of the image sensor data in each spatial region in the real space, the information having been stored in the motion feature index information storage unit.

2. The image sensor data control system as recited in claim 1,
wherein a plurality of the terminal devices is provided to acquire the image sensor data composed of point clouds from different directions with respect to the same real space, and
wherein the aggregation unit aggregates the image sensor data by synthesizing the image sensor data in chronological order, the image sensor data having been acquired by each terminal device and being composed of point clouds.

3. The image sensor data control system as recited in claim 1,
wherein the learning unit utilizes the number of point clouds of the image sensor data in each spatial region in the real space as the motion feature index.

4. The image sensor data control system as recited in claim 1,
wherein the learning unit determines whether the spatial region relates to a static object or a dynamic object by learning temporal changes in the motion feature index of the image sensor data in each spatial region in the real space.

5. The image sensor data control system as recited in claim 4,
wherein the learning unit determines that the spatial region relates to the static object when a deviation of the motion feature index of the image sensor data in a predetermined spatial region in the real space is within a predetermined range, while the learning unit determines that the spatial region relates to the dynamic object when the deviation of the motion feature index of the image sensor data in the predetermined spatial region is outside the predetermined range.

6. The image sensor data control system as recited in claim 4,
wherein the learning unit determines that there are many dynamic objects moving in the spatial region when an average of the motion feature indexes of the image sensor data in the predetermined spatial region in the real space exceeds a predetermined threshold, while the learning unit determines that there are fewer dynamic objects moving in the spatial region when the average of the motion feature indexes of the image sensor data in the predetermined spatial region in the real space is below or equal to the predetermined threshold.

7. The image sensor data control system as recited in claim 4 or 5,
wherein the control unit sets a higher priority for the image sensor data in the spatial region determined to be a dynamic object by the learning unit, while the control unit sets a lower priority for the image sensor data in the spatial region determined to be a static object by the learning unit.

8. The image sensor data control system as recited in claim 6,
wherein the control unit sets a higher priority for the image sensor data in the spatial region determined by the learning unit to have a larger number of moving dynamic objects, while the control unit sets a lower priority for the image sensor data in the spatial region determined by the learning unit to have a smaller number of moving dynamic objects.

9. The image sensor data control system as recited in claim 1,
wherein with respect to the image sensor data acquired in real time by the terminal device, the control unit determines that a moving speed of a dynamic object in a predetermined spatial region is high and sets a higher priority to the image sensor data in the spatial region when a rate of change of the motion feature index of the image sensor data in the spatial region in the real space in a predetermined period of time exceeds a predetermined threshold, while the control unit determines that a moving speed of the dynamic object in the spatial region is low and sets a lower priority to the image sensor data in the spatial region when the rate of change of the motion feature index of the image sensor data in the specified spatial region in the real space in the predetermined time period of time is less than or equal to the predetermined threshold.

10. The image sensor data control system as recited in claim 1,
wherein a server-side transmission unit is provided on an output side of the aggregation unit, and
wherein the control unit controls the server-side transmission unit to preferentially transmit image sensor data in a spatial region that is set to a higher priority, to a predetermined moving object, with respect to the image sensor data acquired in real time by the terminal device.

11. The image sensor data control system as recited in claim 1,
wherein the control unit controls the terminal-side transmission unit to preferentially transmit the image sensor data in a spatial region that is set to a higher priority, to the server device, with respect to the image sensor data acquired in real time by the terminal device.

12. The image sensor data control system as recited in claim 1,
wherein the terminal-side transmission unit receives the priority of the image sensor data in each spatial region from the server device in advance, and preferentially transmits the image sensor data in the spatial region assigned a higher priority to the server device.

13. The image sensor data control system as recited in claim 1,
wherein the real space is composed of a plurality of cells arranged in a grid as spatial regions, and
wherein the control unit sets a priority of the image sensor data for each cell.
